# EUROPEAN PATENT SPECIFICATION

(11) **EP 4 135 279 B1**
(45) Date of publication and mention of the grant of the patent: **22.07.2026**
(21) Application number: 20938473.4
(22) Date of filing: 28.05.2020
(51) Int. Cl.: G06F 21/60, H04L 9/40

(54) **INFORMATION LEAKAGE DETECTION METHOD AND APPARATUS, AND COMPUTER-READABLE MEDIUM**
VERFAHREN UND VORRICHTUNG ZUR ERKENNUNG VON INFORMATIONSLECKS UND COMPUTERLESBARES MEDIUM
PROCÉDÉ ET APPAREIL DE DÉTECTION DE FUITE D'INFORMATIONS, ET SUPPORT LISIBLE PAR ORDINATEUR

(43) Date of publication of application: 15.02.2023
(73) Proprietor: Siemens Aktiengesellschaft, 80333 München (DE)
(72) Inventor: LI, Rui, Beijing 100876 (CN)
(74) Representative: Isarpatent
(86) International application number: PCT/CN2020/093047
(87) International publication number: WO 2021/237621

(56) References cited:
- CN-A- 107 743 123
- CN-A- 108 292 133
- CN-A- 108 985 081
- CN-A- 109 802 953
- CN-A- 111 181 971
- US-A1- 2011 314 550
- US-A1- 2015 312 211
- RESEARCH SHOWCASE: "Detecting and Preventing Data Exfiltration Through Encrypted Web Sessions via Traffic Inspection", 1 March 2013 (2013-03-01), pages 1 - 68, XP093205762, Retrieved from the Internet <URL:https://citeseerx.ist.psu.edu/document?repid=rep1&type=pdf&doi=15e4050c04a5391bcc21ec2988911007e1926254> [retrieved on 20240917]
- XIAN HE-QUN: "Leakage Identification and Quantitative Evaluation Scheme for Confidential Databases", CHINESE JOURNAL OF COMPUTERS, vol. 32, no. 4, 15 April 2009 (2009-04-15), pages 721 - 729, XP055872125, DOI: 10.3724/SP.J.1016.2009.00721

## Description

### Technical Field

The present invention relates to the technical field of cyber security, and in particular to an information leakage detection method and apparatus and a computer-readable medium.

### Background Art

Cyber security is increasingly important. Information leakage detection systems, as a type of security solution, can be used to detect accidental outflow of information, monitoring permissions, access status and unauthorized access identities.

At present, common operation methods of information leakage detection systems include: using encryption methods to protect data, using software installed on the operating system to monitor access to files, etc. The implementation mechanisms of these information leakage detection systems are relatively complex, the software implementation involves the operating system, and most of them need to be implemented by processes running at the backend.

For example, the patent document of an invention titled "Information Leak Prevention Device, and Method and Program Thereof" with a publication number of CN101971186B uses encryption to protect data; while the invention titled "Method and Apparatus for Preventing Information Leak" with a publication number of CN1300654C discloses a solution that utilizes software installed on the operating system to monitor access to files.

At present, most information leakage detection systems need to be implemented by software running on the protected systems, which consumes a large amount of computer resources and may cause failure of the protected systems to run normally.

US 2011/314550 A1 relates to problem of information leaks within organizations, which can occur when individuals with access to sensitive digital information capture and disseminate screen shots.

Detecting and Preventing Data Exfiltration Through Encrypted Web Sessions via Traffic Inspection", Carnegie Mellon University's Software Engineering Institute (SEI) in March 2013, focuses on the detection and prevention of data exfiltration, specifically through encrypted web sessions.

### Summary of the Invention

Embodiments of the present invention provide an information leakage detection method and apparatus, and a computer-readable medium, which can effectively detect information leakage and uses a smaller amount of computer resources.

In a first aspect, an information leakage detection method is provided according to claim 1.

In a second aspect, an information leakage detection apparatus is provided according to claim 11.

In a third aspect, an information leakage detection apparatus is provided according to claim 13.

In a fourth aspect, a computer-readable medium is provided, which stores a computer-readable instruction that, when executed by a processor, causes the processor to perform the steps provided in the first aspect.

Specifically, files comprising signatures are stored in a host of the protected system in advance. Because the signatures in these files are identifiable, it is possible for an attacker to transmit these files together when attempting to steal information from the protected system, and the signatures contained in these files will appear in the data packets sent from the protected system to the outside. Since a signature is unique to one host in the protected system, it is possible to determine from which host the information is leaked. The solution has the advantages of simple implementation and little impact on the protected system. It can be deployed on devices or systems with limited resources, can effectively detect information leakage, and can track the particulars of the information leaked, for example, the location of the leaked information in the protected system, etc.

In any of the above aspects, optionally, for identifying signatures from a data packet, each pre-stored encoded signature may be used to match the data packet to identify a signature. Optionally, for identifying signatures from a data packet, each pre-stored compressed signature may be used to match the data packet to identify a signature. When an attacker steals information, the information may be encoded, compressed, etc. Therefore, each signature may be processed in advance with different encoding methods and compression methods, and the processed signatures are stored. In this way, after a data packet is acquired, the processed signatures are directly used for matching easily and quickly. Once matching is successful, the decoding and decompression methods used by the attacker can also be determined. Based on this, the information stolen by the attacker can be further decoded and decompressed to determine what information is stolen from where in which host and when.

For any of the above aspects, optionally, the one or plurality of files start and end with the signature corresponding to the host where they are located. Such a special location facilitates signature extraction. In addition, with the signature as the start and end, the content in the middle of a file can be demarcated, so that the content in the middle of the file can be easily extracted.

For any of the above aspects, optionally, the one or plurality of files include at least one of the following information items: file description information; information of the host where a file is located. These information items may be used to analyze the attacker's behavior and may also be used to determine the information is stolen by the attacker from where in which host and when, which can provide basis for further emergency measures and evidence collection.

For any of the above aspects, optionally, a signature is stored in a plurality of files in the corresponding host, and the plurality of files are located at different positions of the host. A plurality of files at different locations can further increase the probability of detecting information leakage.

For any of the above aspects, optionally, each of the plurality of files includes storage location information of the file in the host. The obtained storage location information may be used to analyze the attacker's behavior.

For any of the above aspects, optionally, a signature is generated based on an identifier of the corresponding host. Alternatively, a signature is generated based on a plurality of identifiers of the corresponding host. The advantage of this is that it can prevent the collision of signatures of different hosts after a certain algorithm is used to generate the signatures.

For any of the above aspects, optionally, a signature is computed based on a hash algorithm, and the signatures corresponding to different hosts have the same length. In this way, the signature lengths of different hosts are made the same, which is convenient for subsequent identification of signatures from data packets.

For any of the above aspects, optionally, the file name of the one or plurality of files includes the signature corresponding to the host where the file is located. The more times a signature appears, the more likely it is to be identified after it is packaged into a data packet.

For any of the above aspects, optionally, the one or plurality of files are hidden files and/or static files. It is safer to place static files in a protected system, which usually poses no additional risk. Setting files as hidden files can reduce the probability of attackers discovering the files and make it easier to detect information leakage.

### Description of the Drawings

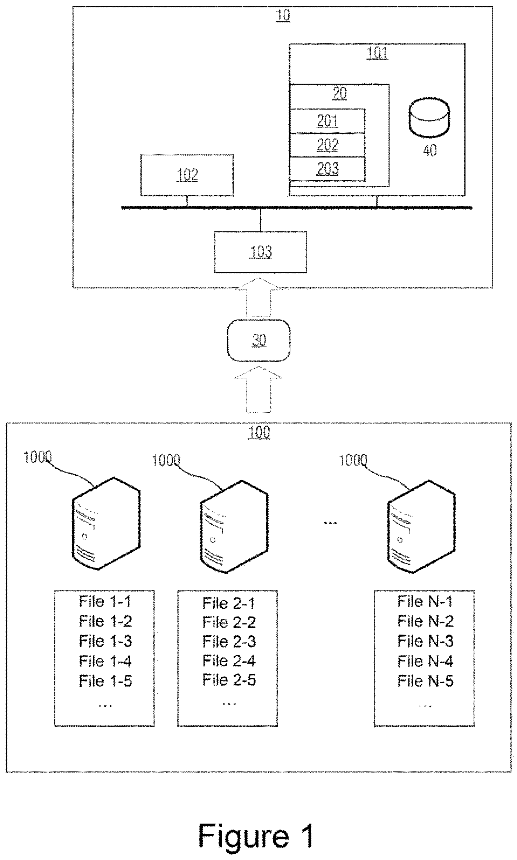

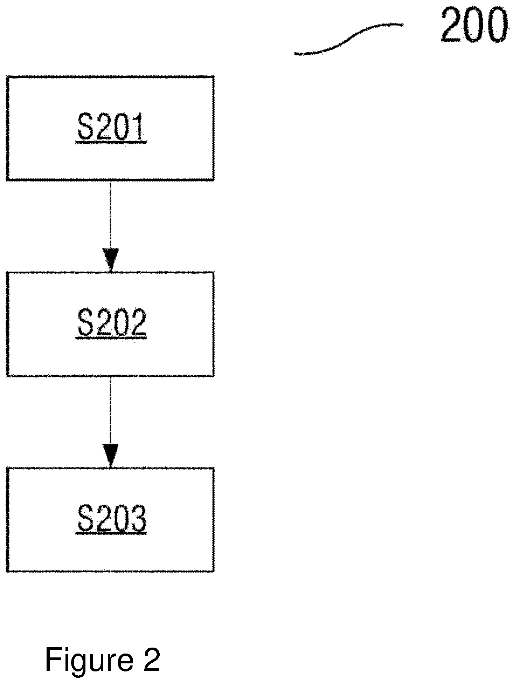

Figure 1 is a schematic structural diagram of the information leakage detection apparatus provided by the embodiments of the present invention. Figure 2 is a flowchart of the information leakage detection method provided by the embodiments of the present invention.

### Reference numerals in the drawings:

| | | |
|---|---|---|
| 100: protected system | 1000: host in the protected system | 10: information leakage detection apparatus |
| 20: information leakage detection program | 30: data packet | 40: signature |
| 101: at least one memory | 102: at least one processor | 103: communication module |
| 201: image acquiring module | 202: signature identification module | 203: deciding module |
| 200: information leakage detection method | S201-S203: steps of method 200 | |
| 1000: host in the protected system 100 | | |

### Specific Embodiments

The subject matter described herein will now be discussed by referring to exemplary embodiments. It should be understood that the discussion of these embodiments is only intended to enable those skilled in the art to better understand and realize the subject described herein, and is not intended to limit the scope, applicability, or examples set forth in the claims. The functions and arrangement of the discussed elements may be changed without departing from the scope of the embodiments of the present invention. Various processes or components may be deleted, replaced or added in each example as needed. For example, the method described herein may be executed in a sequence different from the described sequence, and various steps may be added, omitted, or combined. In addition, the features described in relation to some examples may also be combined in other examples.

As used herein, the term "comprise" and its variations is an open term that means "including but not limited to". The term "based on" means "at least partially based on". The term "one embodiment" or "an embodiment" means "at least one embodiment". The term "another embodiment" means "at least one other embodiment". The term "first", "second", etc. may refer to different or the same objects. Other definitions, either explicit or implicit, may be included below. Unless clearly indicated in the context, the definition of a term is consistent throughout the description.

The embodiments of the present invention are described in detail below by referring to the drawings.

Figure 1 shows the structure of the information leakage detection apparatus 10 provided by the embodiments of the present invention and its connection with a protected system 100.

In the figure, the protected system 100 comprises at least one host 1000 (in one scenario, the protected system 100 is a host 1000 with an Internet connection). Each of some or all of the hosts 1000 in the protected system 100 stores at least one file (only one file or a plurality of files) in advance, and the at least one file is different from ordinary files in that it includes a preset signature 40, which uniquely corresponds to the host where it is located. That is, the signatures included in the at least one file pre-stored on different hosts are different from each other.

The preset signature 40 may be stored in a signature library, which can be stored in at least one memory 101 of the information leakage detection apparatus 10, or may be stored in a separate computer, for example, a remote server. The information leakage detection apparatus 10 can acquire a data packet 30 sent from the protected system 100 through its communication module 103 and identify from the data packet 30 whether there is a signature 40 pre-stored in the signature library, or, when there is a signature 40, decide that the information in the host 1000 corresponding to the signature 40 is leaked.

The information leakage detection apparatus 10 may acquire the data packet 30 in a variety of optional methods. For example, the protected system 100 is connected to a network traffic distributor, which is used to copy or forward the data packet 30 sent from the protected system 100 to the outside. In implementation, the network traffic distributor may be a switch, a router, a firewall, or a gateway. The device may be part of the protected system 100 or part of the information leakage detection apparatus 10. The information leakage detection apparatus 10 acquires the data packet 30 through this device.

As mentioned previously, conventional information leakage detection methods require running software on the protected system, which consumes the processing and storage resources of the protected system. Conventional methods cannot be applied to systems with limited processing and storage resources. For example, for an upper computer in an industrial control system, its purpose is for industrial control, often with limited processing and storage resources, and thus conventional information leakage detection methods cannot be applied.

In this embodiment of the present invention, files containing signatures are pre-stored in the host 1000 of the protected system 100, for example, in some folders that store key information. Because the signatures in these files are identifiable, it is possible for an attacker to transmit these files together when attempting to steal information from the protected system 100, and the signatures comprised in these files will appear in the data packets 30 sent from the protected system 100 to the outside. It should be noted that the data packets 30 may be packets conforming to any network protocol, and the information leakage detection apparatus 10 may acquire these data packets 30, analyze them according to the corresponding network protocol, acquire the payload transmitted in the data packets 30, and use pre-stored signatures 40 to match the contents of these payloads, to decide whether the data packets 30 include preset signatures 40. Since a signature 40 is unique to one host 1000 in the protected system 100, it is possible to determine from which host 1000 information is leaked.

Optionally, a file may start and end with its corresponding signature 40, and such a special position facilitates extraction of the signature 40. In addition, with the signature 40 as the start and end, the content in the middle of a file can be demarcated, so that the content in the middle of the file can be easily extracted. Optionally, the file name may also include the signature 40. The more times a signature 40 appears, the more likely it is to be identified after it is packaged into a data packet 30. In addition to the signature at the start and end of a file, the following information may also be included:
1) File description information
   For example, the file creation time, file modification time, file creator, file processor, file storage location, etc.
2) Information of the host 1000

For example, the name of the host 1000, IP address of the host 1000, etc.

These information items may be used to analyze the attacker's behavior and may also be used to determine the information is stolen by the attacker from where in which host and when, which can provide basis for further emergency measures and evidence collection.

Optionally, a host 1000 may store a plurality of such files, and these files may be stored at different locations on the host 1000. Optionally, the file content may include the storage location information of the file in the host 1000. A plurality of files in different locations can further increase the probability of detecting information leakage; in addition, the obtained storage location information may also be used to analyze the behavior of an attacker.

Optionally, the signature 40 may be generated based on an identifier of the host 1000, for example, the ID of the host 1000, or the name of the host 1000. Alternatively, a signature 40 may also be generated based on a plurality of identifiers of the host 1000. The advantage of this is that it can prevent the collision of signatures of different hosts 1000 after a certain algorithm is used to generate the signatures 40.

Optionally, a signature 40 may be generated based on a hash algorithm. In this way, the lengths of the signatures 40 of different hosts 10000 are made the same, which is convenient for subsequent identification of signatures 40 from data packets 30. The Hash algorithm may be the message digest algorithm (MD5), secure hash algorithm (SHA-1), etc.

When an attacker steals information, the information may be encoded, compressed, etc., for example, Base64 processing, Uniform Resource Locator (URL) encoding, tar packaging, etc. Therefore, the information leakage detection apparatus 10 can process each signature 40 in advance with different encoding methods and compression methods and store the processed signatures 40. In this way, after a data packet 30 is acquired, the processed signatures 40 are directly used for matching easily and quickly. Once matching is successful, the decoding and decompression methods used by the attacker can also be determined. Based on this, the information stolen by the attacker can be further decoded and decompressed to determine what information is stolen from where in which host and when.

Optionally, these files may be set as hidden files, for example, by prefixing the filename with a dot. This can reduce the probability of attackers discovering the files and make it easier to detect information leakage.

Optionally, these files may be static files, for example, .txt files. Compared with dynamic files, for example, executable files such as .exe files, it is safer to place these files in the protected system 100 without posing additional risk.

The implementation of the information leakage detection apparatus 10 will be described below with reference to Figure 1. For example, it may be implemented as a network of computer processors, to execute the information leakage detection method 200 in the embodiments of the present invention. The information leakage detection apparatus 10 may also be a single computer as shown in Figure 1, which comprises at least one memory 101 comprising a computer-readable medium, for example, a random access memory (RAM). The apparatus 10 further comprises at least one processor 102 coupled to the at least one memory 101. A computer-executable instruction is stored in the at least one memory 101, and, when executed by the at least one processor 102, can cause at least one processor 102 to perform the steps described herein. The at least one processor 102 may be a microprocessor, an application specific integrated circuit (ASIC), a digital signal processor (DSP), a central processing unit (CPU), a graphics processing unit (GPU), a state machine, etc. Examples of the computer-readable medium include, but are not limited to, a floppy disk, CD-ROM, magnetic disk, memory chip, ROM, RAM, ASIC, configured processor, all-optical medium, all magnetic tape or another magnetic medium, or any other medium from which a computer processor can read instructions. In addition, various other forms of computer-readable media can transmit or carry instructions to a computer, including routers, private or public networks, or other wired and wireless transmission devices or channels. The instructions may include code in any computer programming language, including C, C++, C language, Visual Basic, java, and JavaScript.

When executed by the at least one processor 102, the at least one memory 101 shown in Figure 1 may contain an information leakage detection program 20, so that the at least one processor 102 executes the information leakage detection method 200 described in the embodiments of the present invention. The information leakage detection program 20 may comprise:
- a data packet acquiring module 201, configured to acquire a data packet 30 sent from the protected system 100 to the outside;
- a signature identification module 202, configured to identify a signature 40 from the data packet 30;
- a deciding module 203, configured to: when a signature 40 is identified, decide that information in the host 1000 corresponding to the identified signature 40 is leaked.

It should be mentioned that embodiments of the present invention may include apparatuses having different architectures than that shown in Figure 1. The above architecture is only exemplary and is used to explain the method 200 provided by the embodiments of the present invention.

In addition, the above modules may also be regarded as functional modules implemented by hardware, which are used to implement various functions involved in the information leakage detection apparatus 10 when executing the information leakage detection method. For example, the control logics of the processes involved in the method are burnt into a chip such as a field-programmable gate array (FPGA) or a complex programmable logic device (CPLD), and these chips or devices perform the functions of the above modules. The specific implementation method can be determined according to the engineering practice.

As shown in Figure 2, one exemplary method 200 according to the embodiments of the present invention comprises the following steps:
- S201: acquiring a data packet 30 sent from a protected system 100 to the outside;
- S202: identifying signatures from the data packet 30, wherein a signature uniquely corresponds to a host 10000 in the protected system 100 and is stored in one or a plurality of files in the corresponding host 1000; and
- S203: when a signature is identified, deciding that information in the host 1000 corresponding to the identified signature is leaked.

For other optional implementations of the method, reference may be made to the foregoing description, which will not be repeated here.

In addition, the embodiments of the present invention also provide a computer-readable medium storing a computer-readable instruction, which, when executed by a processor, causes the processor to perform the information leakage detection method described above.

Examples of the computer-readable medium include floppy disks, hard disks, magneto-optical disks, optical disks (such as CD-ROM, CD-R, CD-RW, DVD-ROM, DVD-RAM, DVD-RW, and DVD+RW), magnetic tapes, volatile memory cards and ROMs. Optionally, the computer-readable instruction may be downloaded from a server computer or a cloud via a communication network.

In summary of the above, the embodiments of the present invention provide an information leakage detection method and apparatus, and a computer-readable medium. They have the advantages of simple implementation and little impact on the protected system. It can be deployed on devices or systems with limited resources, can effectively detect information leakage, and can track the particulars of the information leaked, for example, the location of the leaked information in the protected system, etc.

It should be noted that not all steps and modules in the above processes and system structural diagrams are necessary, and some steps or modules may be ignored based on actual needs. The sequence of execution of the steps is not fixed and can be adjusted as needed. The system structure described in the above embodiments may be a physical structure or a logical structure, i.e., some modules may be implemented by the same physical entity, or some modules may be implemented by multiple physical entities or may be implemented by certain components in several independent devices working together.

## Claims

1. An information leakage detection method (200), **characterized by** comprising:
- acquiring (S201) a data packet (30) sent from a protected system (100) to the outside;
- identifying (S202) signatures from the data packet (30), wherein a signature uniquely corresponds to a host computer (1000) storing files in the protected system (100) and the signature is stored in one or a plurality of files stored in the corresponding host computer (1000) in the protected system, wherein signatures included in files stored in different host computers are different from each other;
- when a signature is identified, deciding (S203) that information in the host computer (1000) corresponding to the identified signature is leaked.

2. The method claimed in claim 1, **characterized in that** identifying (S202) a signature from the data packet (30) comprises:
- using each pre-stored coded signature to match the data packet (30) to identify a signature; and/or
- using each pre-stored compressed signature to match the data packet (30) to identify a signature.

3. The method as claimed in claim 1 or 2, **characterized in that** the one or plurality of files start and end with the signature corresponding to the host where they are located.

4. The method as claimed in any of claims 1 to 3, **characterized in that** the one or plurality of files include at least one of the following information items:
- file description information;
- information of the host computer (1000) where the file is located.

5. The method as claimed in any of claims 1 to 4, **characterized in that** a signature is stored in a plurality of files in the corresponding host computer (1000), and the plurality of files are located at different positions of the host computer (1000).

6. The method as claimed in claim 5, **characterized in that** each of the plurality of files includes storage location information of the file in the host computer (1000).

7. The method as claimed in any of claims 1 to 6, **characterized in that**,
- a signature is generated based on an identifier of the corresponding host computer (1000); or
- a signature is generated based on a plurality of identifiers of the corresponding host computer (1000).

8. The method as claimed in any of claims 1 to 7, **characterized in that** a signature is computed based on a Hash algorithm,
and the signatures corresponding to different hosts computer (1000) have the same length.

9. The method as claimed in any of claims 1 to 8, **characterized in that** the file name of the one or plurality of files includes the signature corresponding to the host where a file is located.

10. The method as claimed in any of claims 1 to 9, **characterized in that** the one or plurality of files are hidden files and/or static files.

11. An information leakage detection apparatus (10), **characterized by** comprising:
- a data packet acquiring module (201), configured to acquire a data packet (30) sent from a protected system (100) to the outside;
- a signature identification module (202), configured to identify signatures from the data packet (30), wherein a signature uniquely corresponds to a host computer (1000) storing files in the protected system (100) and the signature is stored in one or a plurality of files stored in the corresponding host computer (1000) in the protected system, wherein signatures included in files stored in different host computers are different from each other; and
- a deciding module (203), configured to, when a signature is identified, decide that information in the host computer (1000) corresponding to the identified signature is leaked.

12. The apparatus as claimed in claim 11, **characterized in that** the data packet acquiring module (201) is specifically configured to:
- use each pre-stored coded signature to match the data packet (30) to identify a signature; and/or
- use each pre-stored compressed signature to match the data packet (30) to identify a signature.

13. An information leakage detection apparatus (10), **characterized in that** it comprises:
at least one memory (101), configured to store computer-readable code;
at least one processor (102), configured to call the computer-readable code to execute the method as claimed in any of claims 1 to 10.

14. A computer-readable medium, **characterized in that** the computer-readable medium stores a computer-readable instruction, which, when executed by a processor, causes the processor to execute the method as claimed in any of claims 1 to 10.

## Patentansprüche

1. Informationsleckdetektionsverfahren (200), **dadurch gekennzeichnet, dass** es Folgendes umfasst:
- Erfassen (S201) eines Datenpakets (30), das von einem geschützten System (100) nach außen gesendet wird;
- Identifizieren (S202) von Signaturen von dem Datenpaket (30), wobei eine Signatur eindeutig einem Host-Computer (1000) entspricht, der Dateien in dem geschützten System (100) speichert, und die Signatur in einer oder mehreren Dateien gespeichert ist, die in dem entsprechenden Host-Computer (1000) in dem geschützten System gespeichert sind, wobei Signaturen, die in Dateien enthalten sind, die in verschiedenen Host-Computern gespeichert sind, voneinander verschieden sind;
- wenn eine Signatur identifiziert wird, Entscheiden (S203), dass Informationen in dem Host-Computer (1000), die der identifizierten Signatur entsprechen, geleckt werden.

2. Verfahren nach Anspruch 1, **dadurch gekennzeichnet, dass** das Identifizieren (S202) einer Signatur von dem Datenpaket (30) Folgendes umfasst:
- Verwenden jeder vorgespeicherten codierten Signatur, die mit dem Datenpaket (30) übereinstimmt, um eine Signatur zu identifizieren; und/oder
- Verwenden jeder vorgespeicherten komprimierten Signatur, die mit dem Datenpaket (30) übereinstimmt, um eine Signatur zu identifizieren.

3. Verfahren nach Anspruch 1 oder 2, **dadurch gekennzeichnet, dass** die eine oder die mehreren Dateien mit der Signatur beginnen und enden, die dem Host entspricht, auf dem sie sich befinden.

4. Verfahren nach einem der Ansprüche 1 bis 3, **dadurch gekennzeichnet, dass** die eine oder die mehreren Dateien mindestens eines der folgenden Informationselemente beinhalten:
- Informationen zur Dateibeschreibung;
- Informationen des Host-Computers (1000), auf dem sich die Datei befindet.

5. Verfahren nach einem der Ansprüche 1 bis 4, **dadurch gekennzeichnet, dass** eine Signatur in mehreren Dateien in dem entsprechenden Host-Computer (1000) gespeichert wird und sich die mehreren Dateien an verschiedenen Positionen des Host-Computers (1000) befinden.

6. Verfahren nach Anspruch 5, **dadurch gekennzeichnet, dass** jede der mehreren Dateien Speicherortsinformationen der Datei in dem Host-Computer (1000) beinhaltet.

7. Verfahren nach einem der Ansprüche 1 bis 6, **dadurch gekennzeichnet, dass**
- eine Signatur basierend auf einer Kennung des entsprechenden Host-Computers (1000) erzeugt wird; oder
- eine Signatur basierend auf mehreren Kennungen des entsprechenden Host-Computers (1000) erzeugt wird.

8. Verfahren nach einem der Ansprüche 1 bis 7, **dadurch gekennzeichnet, dass** eine Signatur basierend auf einem Hash-Algorithmus berechnet wird und die Signaturen, die verschiedenen Host-Computern (1000) entsprechen, die gleiche Länge aufweisen.

9. Verfahren nach einem der Ansprüche 1 bis 8, **dadurch gekennzeichnet, dass** der Dateiname der einen oder der mehreren Dateien die Signatur beinhaltet, die dem Host entspricht, auf dem sich eine Datei befindet.

10. Verfahren nach einem der Ansprüche 1 bis 9, **dadurch gekennzeichnet, dass** die eine oder die mehreren Dateien versteckte Dateien und/oder statische Dateien sind.

11. Informationsleckdetektionseinrichtung (10), **dadurch gekennzeichnet, dass** sie Folgendes umfasst:
- ein Datenpaketerfassungsmodul (201), das ausgelegt ist zum Erfassen eines Datenpakets (30), das von einem geschützten System (100) nach außen gesendet wird;
- ein Signaturidentifikationsmodul (202), das ausgelegt ist zum Identifizieren von Signaturen von dem Datenpaket (30), wobei eine Signatur eindeutig einem Host-Computer (1000) entspricht, der Dateien in dem geschützten System (100) speichert, und die Signatur in einer oder mehreren Dateien gespeichert ist, die in dem entsprechenden Host-Computer (1000) in dem geschützten System gespeichert sind, wobei Signaturen, die in Dateien enthalten sind, die in verschiedenen Host-Computern gespeichert sind, voneinander verschieden sind; und
- ein Entscheidungsmodul (203), das ausgelegt ist zum, wenn eine Signatur identifiziert wird, Entscheiden, dass Informationen in dem Host-Computer (1000), die der identifizierten Signatur entsprechen, geleckt werden.

12. Einrichtung nach Anspruch 11, **dadurch gekennzeichnet, dass** das Datenpaketerfassungsmodul (201) spezifisch ausgelegt ist zum:
- Verwenden jeder vorgespeicherten codierten Signatur, die mit dem Datenpaket (30) übereinstimmt, um eine Signatur zu identifizieren; und/oder
- Verwenden jeder vorgespeicherten komprimierten Signatur, die mit dem Datenpaket (30) übereinstimmt, um eine Signatur zu identifizieren.

13. Informationsleckdetektionseinrichtung (10), **dadurch gekennzeichnet, dass** sie Folgendes umfasst:
mindestens einen Speicher (101), der dazu ausgelegt ist, computerlesbaren Code zu speichern;
mindestens einen Prozessor (102), der dazu ausgelegt ist, den computerlesbaren Code aufzurufen, um das Verfahren nach einem der Ansprüche 1 bis 10 auszuführen.

14. Computerlesbares Medium, **dadurch gekennzeichnet, dass** das computerlesbare Medium eine computerlesbare Anweisung speichert, die, wenn sie von einem Prozessor ausgeführt wird, den Prozessor veranlasst, das Verfahren nach einem der Ansprüche 1 bis 10 auszuführen.

## Revendications

1. Procédé (200) de détection de fuite d'informations, **caractérisé en ce qu'**il comprend :
- l'acquisition (S201) d'un paquet de données (30) envoyé d'un système protégé (100) vers l'extérieur ;
- l'identification (S202) de signatures provenant du paquet de données (30), dans lequel une signature correspond de manière unique à un ordinateur hôte (1000) stockant des fichiers dans le système protégé (100) et la signature est stockée dans un ou plusieurs fichiers stockés dans l'ordinateur hôte (1000) correspondant du système protégé, dans lequel les signatures contenues dans des fichiers stockés dans des ordinateurs hôtes différents sont différentes les unes des autres ;
- lorsqu'une signature est identifiée, la décision (S203) qu'il y a fuite d'informations dans l'ordinateur hôte (1000) correspondant à la signature identifiée.

2. Procédé selon la revendication 1, **caractérisé en ce que** l'identification (S202) d'une signature provenant du paquet de données (30) comprend :
- l'utilisation de chaque signature codée préstockée pour la faire correspondre au paquet de données (30) afin d'identifier une signature ; et/ou
- l'utilisation de chaque signature compressée préstockée pour la faire correspondre au paquet de données (30) afin d'identifier une signature.

3. Procédé selon la revendication 1 ou 2, **caractérisé en ce que** le ou les fichiers commencent et se terminent par la signature correspondant à l'hôte où ils sont situés.

4. Procédé selon l'une quelconque des revendications 1 à 3, **caractérisé en ce que** le ou les fichiers comprennent au moins l'un des éléments d'information suivants :
- des informations de description de fichier ;
- des informations de l'ordinateur hôte (1000) où est situé le fichier.

5. Procédé selon l'une quelconque des revendications 1 à 4, **caractérisé en ce qu'**une signature est stockée dans une pluralité de fichiers dans l'ordinateur hôte correspondant (1000), et la pluralité de fichiers est située à différentes positions de l'ordinateur hôte (1000).

6. Procédé selon la revendication 5, **caractérisé en ce que** chacun de la pluralité de fichiers comprend des informations d'emplacement de stockage du fichier dans l'ordinateur hôte (1000) .

7. Procédé selon l'une quelconque des revendications 1 à 6, **caractérisé en ce que** :
- une signature est générée sur la base d'un identifiant de l'ordinateur hôte (1000) correspondant ; ou
- une signature est générée sur la base d'une pluralité d'identifiants de l'ordinateur hôte (1000) correspondant.

8. Procédé selon l'une quelconque des revendications 1 à 7, **caractérisé en ce qu'**une signature est calculée sur la base d'un algorithme de hachage, et les signatures correspondant à différents ordinateurs hôtes (1000) ont la même longueur.

9. Procédé selon l'une quelconque des revendications 1 à 8, **caractérisé en ce que** le nom de fichier du ou des fichiers comprend la signature correspondant à l'hôte où est situé un fichier.

10. Procédé selon l'une quelconque des revendications 1 à 9, **caractérisé en ce que** le ou les fichiers sont des fichiers cachés et/ou des fichiers statiques.

11. Appareil de détection de fuite d'informations (10), **caractérisé en ce qu'**il comprend :
- un module d'acquisition (201) de paquets de données, configuré pour acquérir un paquet de données (30) envoyé d'un système protégé (100) vers l'extérieur,
- un module d'identification de signatures (202), configuré pour identifier des signatures provenant du paquet de données (30), dans lequel une signature correspond de manière unique à un ordinateur hôte (1000) stockant des fichiers dans le système protégé (100) et la signature est stockée dans un ou plusieurs fichiers stockés dans l'ordinateur hôte (1000) correspondant dans le système protégé, dans lequel les signatures contenues dans des fichiers stockés dans des ordinateurs hôtes différents sont différentes les unes des autres ; et
- un module de décision (203), configuré, lorsqu'une signature est identifiée, pour décider qu'il y a fuite d'informations dans l'ordinateur hôte (1000) correspondant à la signature identifiée.

12. Appareil selon la revendication 11, **caractérisé en ce que** le module d'acquisition de paquets de données (201) est spécifiquement configuré pour :
- utiliser chaque signature codée préstockée pour la faire correspondre au paquet de données (30) afin d'identifier une signature ; et/ou
- utiliser chaque signature compressée préstockée pour la faire correspondre au paquet de données (30) afin d'identifier une signature.

13. Appareil (10) de détection de fuite d'informations, **caractérisé en ce qu'**il comprend :
au moins une mémoire (101), configurée pour stocker un code lisible par ordinateur ;
au moins un processeur (102), configuré pour appeler le code lisible par ordinateur afin d'exécuter le procédé selon l'une quelconque des revendications 1 à 10.

14. Support lisible par ordinateur, **caractérisé en ce que** le support lisible par ordinateur stocke une instruction lisible par ordinateur qui, lorsqu'elle est exécutée par un processeur, amène le processeur à exécuter le procédé selon l'une quelconque des revendications 1 à 10.
